# EUROPÄISCHE PATENTSCHRIFT

(11) **EP 0 406 722 B1**
(45) Veröffentlichungstag und Bekanntmachung des Hinweises auf die Patenterteilung: **12.10.1994**
(21) Anmeldenummer: 90112457.8
(22) Anmeldetag: 29.06.1990
(51) Int. Cl.: F16C 17/12

(54) **Aerodynamisches Gleitlager**
Aerodynamic sliding-contact bearing
Palier à contact lisse aérodynamique

(30) Priorität: 01.07.1989 DE 3921704
(43) Veröffentlichungstag der Anmeldung: 09.01.1991
(73) Patentinhaber: BMW ROLLS-ROYCE GmbH, 61440 Oberursel (DE)
(72) Erfinder: Domes, Bernd, Dr., D-6393 Wehrheim 2 (DE)
(74) Vertreter: Bücken, Helmut

(56) Entgegenhaltungen:
- EP-A- 0 303 189
- DE-A- 2 310 592
- DE-A- 2 838 768
- FR-A- 2 217 585

## Beschreibung

Die Erfindung betrifft ein aerodynamisches Gleitlager nach dem Oberbegriff des Anspruchs 1.

Ein derartiges Gleitlager ist aus der DE-A-3544 392 bekannt, bei dem eine Weile auf umfangsmäßig aufgeteilten Teilstrukturen gelagert ist, die definierte Federsteifigkeiten und Dämpfungsvermögen aufweisen. Zwischen den Teilstrukturen und dem Lagergehäuse befindet sich jeweils ein Dämpfungsspalt, der dem Gleitlager eine bestimmte Dämpfungscharakteristik verleiht. Die Teilstrukturen bestehen jeweils aus einem Gleitsegment und einem Federelement, die radial hintereinander angeordnet sind, wobei sich das starre Gleitsegment gegebenenfalls über einen außenseitigen Fortsatz am Federelement abstützt. Dieser Aufbau erfordert relativ viele Teile, die außerdem in radialer Richtung entsprechend viel Bauraum benötigen und zu relativ großen Toleranzsummen führen.

Außerdem ist es aus der DE-C-2909 973 bekannt, bei einem aerodynamischen Gleitlager zwei ineinandergesetzte, dünnwandige, elastische Hülsen zu verwenden, von denen die innere als Lagerschale dient und sich über Stege auf der äußeren Hülse abstützt. Die äußere Hülse, die zur federnden und dämpfenden Abstützung der inneren Hülse dient, stützt sich wiederum über Stege an der Innenwand der Gehäusebohrung ab. Der ursprünglich kreisförmige Querschnitt der inneren Hülse ist durch Einspannung der elastischen und dämpfenden Struktur in die Gehäusebohrung so verformt, daß im Laufspalt auf dem Lagerumfang vier keilförmige Verengungen entstehen. Diese Konstruktion ist ebenfalls aufwendig, benötigt mehr radialen Bauraum und führt zu relativ großen Toleranzsummen.

Aufgabe der Erfindung ist es daher, ein aerodynamisches Gleitlager nach dem Oberbegriff des Anspruchs 1 zu schaffen, daß mit möglichst wenig Bauteilen und möglichst wenig radialem Bauraum auskommt.

Diese Aufgabe wird entsprechend den Merkmalen des Anspruchs 1 gelöst.

Dadurch, daß Dämpfungs- und Federelement miteinander vereinigt sind, wird die Zahl der Bauteile wesentlich herabgesetzt, wodurch auch der radiale Bauraum wesentlich vermindert werden kann. Gleichzeitig bedeutet dies verkleinerte Toleranzsummen. Mit dieser Konstruktion sind daher auch wesentliche Vorteile in Bezug auf Herstellung, Kosten und Funktion verbunden, insbesondere wenn als Dämpfungs- und Federelement eine einstückige Federhülse aus Federstahl verwendet wird.

Weitere Ausgestaltungen der Erfindung sind der nachfolgenden Beschreibung und den Unteransprüchen zu entnehmen.

Die Erfindung wird nachstehend anhand der in den beigefügten Abbildungen dargestellten Ausführungsbeispiele näher erläutert.

Fig. 1 zeigt einen Schnitt durch ein aerodynamische Radiallager einer ersten Ausführungsform.

Fig. 2 zeigt ausschnittweise einen Schnitt durch ein aerodynamisches Radiallager einer zweiten Ausführungsform.

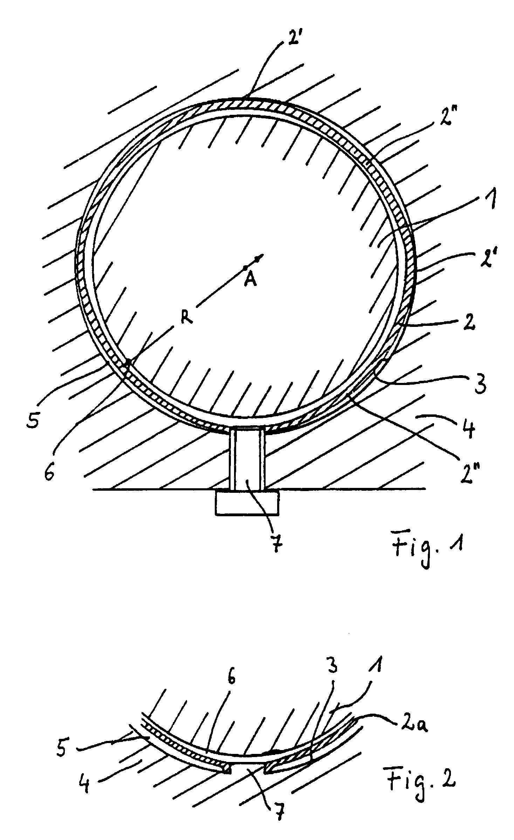

Bei der in Fig. 1 dargestellten Ausführungsform eines aerodynamischen Radiallagers ist eine Welle 1 über eine dünnwandige, elastische Federhülse 2, die eine gleichmäßige oder profilierte Wandstärke aufweist, in einer zylindrischen Bohrung 3 eines Lagergehäuses 4 gelagert.

Die Federhülse 2 besteht aus Federstahl und ist im Schnitt etwas unrund, so daß sie an mehreren (mindestens drei, hier vier) Abstützstellen 2' außenumfänglich an der Wandung der Bohrung 3 anliegt und somit eine etwa "eckige" Form besitzt, so daß zwischen der Wandung der Bohrung 3 und denjenigen Federsegmenten 2'' der Federhülse 2, die sich jeweils zwischen zwei benachbarten Abstützstellen 2' befinden und einen Krümmungsradius R größer als der Radius der Bohrung 3 besitzen, wobei der Mittelpunkt außerhalb der Achse A der Welle 1 liegt, sichelförmige Dämpfungsspalte 5 ausgebildet sind. Zwischen dem Innenumfang der Federhülse 2 und der Welle 1 befindet sich ein entsprechend der "mehreckigen" Form der Federhülse 2 unrunder, d.h. keilförmige Verengungen aufweisender Laufspalt 6.

Die Federhülse 2 besitzt eine tangentiale Fixierung 7 an einer der Abstützstellen 2' in Form einer vom Lagergehäuse 3 aufgenommenen Schraube, die sich mit ihrem freien Ende in eine entsprechende Öffnung oder Vertiefung der Federhülse 2 erstreckt. Anstelle einer Schraube läßt sich auch ein Stift o.dgl. verwenden.

Eine derartige Federhülse 2 kann in einfacher Weise aus einem Abschnitt eines Rohrs aus Federstahl hergestellt werden, der mit einem geeigneten Werkzeug in die "eckige" Form gepreßt wird. Gegebenenfalls kann er auch von einem entsprechend geformten oder profilierten Rohr abgelängt werden. Wichtig ist die Einhaltung einer bestimmten gleichmäßigen Wandstärke oder einer genau definierten Dickenverteilung, um entsprechend dem Wellen- und Lagerdurchmesser den Dämpfungs- und den Laufspalt 5, 6 genau definieren zu können. Die Herstellung einer profilierten Federhülse 2 oder entsprechender einzelner Federsegmente 2a kann auch elektroerosiv erfolgen.

Wie sich aus der Ausführungsform von Fig. 2 ergibt, können auch mehrere tangentiale Fixierungen 7 vorgesehen sein. Diese können an allen Abstützstellen 2', an denen die Federhülse 2 an der Wandung der Bohrung 3 anliegt, vorgesehen sein.

Anstelle der Federhülse 2 können auch entsprechende separate Federsegmente 2a in einer Anzahl entsprechend derjenigen der Abstützstellen 2' (im dargestellten Falle vier) verwendet werden, die sich dann an den tangentialen Fixierungen 7 abstützen. In diesem Fall können die tangentialen Fixierungen 7 als in die Bohrung 3 hineinragende axiale Rippen ausgebildet sein. Die einzelnen Federsegmente 2a können benachbart zu den tangentialen Fixierungen zum Außenumfang hin leicht abgekröpft sein oder eine entsprechende Profilierung aufweisen.

Die Federhülse 2 bzw. die separaten Federsegmente 2a sind mit einer geeigneten Beschichtung versehen, die elastisch ist und der Federhülse 2 bzw. den separaten Federsegmenten 2a einen niedrigen Reibwert verleiht. Als Beschichtung auf die Welle 1 kommt u.a. diamantartiger Kohlenstoff, der auch, Titannitrit oder eine andere harte, verschleißfeste und reibungsarme Beschichtung infrage. Bei einer Welle 1 aus hartem Material oder mit einer harten, verschlelßfesten Beschichtung bietet sich auch eine relativ weiche Beschichtung der Federhülse 2 bzw. der Federsegmente 2a an. Sie könnte kleinere Staub- oder Schmutzpartikel kompensieren, ohne daß die Funktion nennenswert eingeschränkt wird. Auch eine harte Beschichtung der Federhülse 2 bzw. der Federsegmente 2a und eine weich beschichtete Welle 1 ist möglich.

## Patentansprüche

1. Aerodynamisches Gleitlager für mit hohen Umfangsdrehgeschwindigkeiten umlaufende Wellen (1), das in einem Lagergehäuse (4) in einer zylindrischen Bohrung (3) angeordnet ist und das einstückige, als dünnwandige Hülsenabschnitte ausgebildete Segmente (2'' oder 2a) aufweist, die verdrehgesichert sind und jeweils federnde und dämpfende Eigenschaften aufweisen, wobei die Segmente sich an mehreren Umfangsstellen (2) im Lagergehäuse (4) abstützen und mit der Welle (1) einen mehrfach konvergierenden Laufspalt (6) und mit der Bohrung (3) im Lagerhäuse (4) Dämpfungsspalte (5) bilden,
dadurch gekennzeichnet, daß die Segmente (2'' oder 2a) zur Bildung der Dämpfungs- und Laufspalte (5,6) eine in Umfangsrichtung gesehen gleichmäßige oder profilierte Wandstärke aufweisen, aus Federstahl bestehen und mit einer reibungsarmen, elastischen und verschleißfesten Beschichtung versehen sind.

2. Aerodynamisches Gleitlager nach Anspruch 1,
dadurch gekennzeichnet, daß die Segmente (2'') eine Federstahlhülse (2) mit im Schnitt mehreckiger Form bilden.

3. Aerodynamisches Gleitlager nach Anspruch 2,
dadurch gekennzeichnet, daß die Federstahlhülse (2) durch Ablängen von einem Rohr gegebenenfalls mit anschließender Verformung zu der im Schnitt mehreckigen Form hergestellt ist.

4. Aerodynamisches Gleitlager nach einem der Ansprüche 2 oder 3,
dadurch gekennzeichnet, daß die Federstahlhülse (2) mit im Schnitt profilierten Segmenten (2'' oder 2a) gemeinsam mit dem Gehäuse (4) sichelförmige oder konzentrische Dämpfungsspalte (5) bilden.

5. Aerodynamisches Gleitlager nach einem der Ansprüche 2 bis 4,
dadurch gekennzeichnet, daß die Federstahlhülse (2) an einer sich im Lagergehäuse (4) abstützenden Stelle mit einer Öffnung oder Vertiefung versehen ist, die mit einem als Verdrehsicherung wirkenden Vorsprung (7) in Eingriff steht.

## Claims

1. An aerodynamic sliding bearing for shafts (1) rotating at high peripheral speeds, the bearing being disposed in a casing (4) in a cylindrical bore (3) and comprising one-piece segments (2'' or 2a) in the form of thin-walled sleeve portions and secured against rotation and each having resilient and shock-absorbing properties, the segments bearing against the casing (4) at a number of places (2) on the periphery and co-operating with the shaft (1) to form a multiple- converging running gap (6) and co-operating with the bore (3) in the casing (4) to form shock-absorbing gaps (5), characterised in that the segments (2'' or 2a) for forming the shock-absorbing and running gaps (5, 6) have a uniform or profiled wall thickness as seen in the peripheral direction, are made of spring steel and are provided with a low-friction, resilient, wear-resistant coating.

2. An aerodynamic sliding bearing according to claim 1, characterised in that the segments (2'') form a spring steel sleeve (2) having a polygonal cross- section.

3. An aerodynamic sliding bearing according to claim 2, characterised in that the spring steel sleeve (2) is produced by cutting a tube to length, optionally with subsequent conversion to the polygonal cross-section.

4. An aerodynamic sliding bearing according to claim 2 or 3, characterised in that the spring steel sleeve (2) has profiled-section segments (2'' or 2a) which co- operate with the casing (4) to form crescent-shaped or concentric shock-absorbing gaps (5).

5. An aerodynamic sliding bearing according to any one of claims 2 to 4, characterised in that the spring steel sleeve (2), at a place where it bears against the casing (4), has an opening or recess in engagement with a projection (7) which acts to prevent rotation.

## Revendications

1. Palier à contact lisse aérodynamique pour des arbres (1) tournant avec une vitesse de rotation périphérique élevée, qui est disposé dans un boîtier de palier (4) dans un alésage cylindrique (3) et présente les segments (2'' ou 2a) d'un seul morceau, constitués sous la forme de sections de manchon à paroi mince, qui sont bloqués en rotation et présentent respectivement des propriétés d'amortissement et d'élasticité, les segments s'appuyant en plusieurs points (2) de la périphérie dans le boîtier du palier (4) et forment avec l'arbre (1) une fente de passage (6) convergent plusieurs fois et des fentes d'amortissement (5) avec l'alésage (3) dans le boîtier de palier (4), palier caractérisé en ce que les segments (2'' ou 2a) présentent pour former les fentes d'amortissement et de passage (5, 6) une épaisseur de paroi régulière ou profilée, vu dans le sens périphérique, en ce qu'ils consistent en acier à ressort et sont pourvus d'un revêtement résistant à l'usure, élastique et présentant un faible coefficient de frottement.

2. Palier à contact lisse aérodynamique selon la revendication 1, caractérisé en ce que les segments (2'') forment un manchon en acier à ressort (2) ayant en coupe une forme multiangulaire.

3. Palier à contact lisse aérodynamique selon la revendication 2, caractérisé en ce que le manchon en acier à ressort (2) est fabriqué par mise à longueur d'un tube le cas échéant avec ensuite déformation pour prendre la forme polygonale en coupe.

4. Palier à contact lisse aérodynamique selon l'une des revendications 2 ou 3, caractérisé en ce que le manchon en acier à ressort (2) avec en coupe des segments profilés (2'' ou 2a) forme en commun avec le boîtier (4) des fentes d'amortissement (5) en forme de faucille ou concentriques.

5. Palier à contact lisse aérodynamique selon l'une des revendications 2 à 4, caractérisé en ce que le manchon en acier à ressort (2) est pourvu en un point s'appuyant dans le boîtier de palier (4) d'une ouverture ou d'un renfoncement qui vient en prise avec une saillie (7) faisant office de sécurité contre la rotation.
